# EUROPÄISCHE PATENTANMELDUNG

(11) **EP 2 667 020 A1**
(43) Veröffentlichungstag der Anmeldung: **27.11.2013**
(21) Anmeldenummer: 12169179.4
(22) Anmeldetag: 24.05.2012
(51) Int. Cl.: F03D 7/02

(54) **Pitchsystem, Wind- oder Wasserenergieanlage mit einem Pitchsystem und Verfahren zum Betrieb eines Pitchsystems**

(71) Anmelder: Moog Unna GmbH, 59423 Unna (DE)
(72) Erfinder: Lehmann, Felix Johan, 59174 Kamen (DE)

(57) **Zusammenfassung**

Beschrieben und dargestellt ist ein Pitchsystem für einen Rotor (1), wobei der Rotor (1) eine Rotornabe (2) und wenigstens zwei Rotorblätter (3) aufweist, jedes der Rotorblätter (3) um seine Längsachse drehbar an der Rotornabe (2) angeordnet ist, das Pitchsystem je Rotorblatt (3) wenigstens einen zugeordneten Pitchmotor aufweist, und jedes der Rotorblätter (3) durch den wenigstens einen zugeordneten Pitchmotor um seine Längsachse drehbar ist.

Ein Pitchsystem, das besonders sicher zu betreiben ist, wird erfindungsgemäß dadurch realisiert, dass wenigstens einer der Pitchmotoren ein Gleichstrommotor (4) und wenigstens einer der Pitchmotoren ein Wechselstrommotor (5) ist, wobei jeder Wechselstrommotor (5) durch wenigstens einen Umrichter (6) speisbar ist oder jeder Pitchmotor durch wenigstens einen Umrichter (6) speisbar ist.

Beschrieben und dargestellt ist eine Wind- oder Wasserenergieanlage mit einem Pitchsystem.

Eine Wind- oder Wasserenergieanlage mit einem Pitchsystem, die besonders sicher zu betreiben ist, wird erfindungsgemäß dadurch realisiert, dass das Pitchsystem nach einem der Ansprüche 1 bis 11 ausgestaltet ist.

Beschrieben und dargestellt ist ein Verfahren zum Betrieb eines Pitchsystems, mit einem Pitchsystem nach einem der Ansprüche 1 bis 11.

Ein Verfahren zum Betrieb eines Pitchsystems, das besonders sicher ist, wird erfindungsgemäß dadurch realisiert, dass bei Ausfall wenigstens eines Wechselstrommotors (5) und/oder des den Wechselstrommotor (5) speisenden Umrichters (6) bzw. der den Wechselstrommotor (5) speisenden Umrichter (6), die Rotorblätter (3) durch die verbleibenden nicht ausgefallenen Pitchmotoren, in eine derartige Position gedreht werden, dass der Rotor (1) aerodynamisch gebremst wird.

## Beschreibung

Die Erfindung betrifft ein Pitchsystem für einen Rotor, wobei der Rotor eine Rotornabe und wenigstens zwei Rotorblätter aufweist, jedes der Rotorblätter um seine Längsachse drehbar an der Rotornabe angeordnet ist, das Pitchsystem je Rotorblatt wenigstens einen zugeordneten Pitchmotor aufweist, und jedes der Rotorblätter durch den wenigstens einen zugeordneten Pitchmotor um seine Längsachse drehbar ist.

Aus dem Stand der Technik sind Pitchsysteme bekannt, bei denen alle Pitchmotoren durch Gleichstrommotoren gebildet werden. Ein Grund für die Verwendung von Gleichstrommotoren als Pitchmotoren ist die üblicherweise gute Regelbarkeit von Gleichstrommotoren im Vergleich zu Wechselstrommotoren, wie zum Beispiel Synchronmotoren und Asynchronmotoren. Wechselstrommotoren haben gegenüber Gleichstrommotoren wiederum den Vorteil, dass sie in der Regel günstiger sind und bei gleicher Leistung eine geringe Baugröße aufweisen. Demgegenüber stellt sich bei Gleichstrommotoren das Problem, dass sie häufig einen höheren Verschleiß aufweisen, was kürzere Wartungsintervalle notwendig macht.

Die Erfindung betrifft ferner eine Wind- oder Wasserenergieanlage mit einem Pitchsystem. Bei modernen Windenergieanlagen sind die Rotorblätter in der Regel um ihre Längsachsen drehverstellbar ausgebildet. Hierdurch lässt sich durch Einstellung des als Pitchwinkel bezeichneten Drehwinkels der Rotorblätter um ihre Längsachsen die Energieaufnahme aus dem Wind verändern. Zur Einstellung des Pitchwinkels wird ein Pitchsystem verwendet, welches entweder elektrisch oder hydraulisch ausgebildet ist.

Durch Rotation der Rotorblätter um ihre jeweilige Längsachse regeln Pitchsysteme die Stellung der Rotorblätter zum Wind und sind häufig die einzige sichere Möglichkeit den Rotor einer Windenergieanlage zum Stillstand zu bringen. Dies geschieht dadurch, dass das Pitchsystem die Rotorblätter in die so genannte Fahnenstellung dreht. In der Fahnenstellung nehmen die Rotorblätter keine Energie mehr aus dem Wind auf. Vielmehr wird der sich drehende Rotor durch den Luftwiderstand der Rotorblätter aerodynamisch gebremst. Folglich kommt der Rotor mangels Antrieb durch den Wind und aufgrund der aerodynamischen Bremsung durch die Rotorblätter nach gewisser Zeit zum Stillstand. Um eine aerodynamische Bremsung herbeizuführen ist es nicht immer notwendig die Rotorblätter vollständig in die Fahnenstellung zu bringen. Je nach Windgeschwindigkeit kann eine aerodynamische Bremsung zumindest kurzzeitig bereits bei einer geringen Änderung des Pitchwinkels einsetzen. Dieser Zusammenhang ist dem Fachmann bekannt und ist darüber hinaus durch einfache Versuche leicht herleitbar. Die Energieversorgung des Pitchsystems erfolgt üblicherweise durch das Netz, in das die Windenergieanlage auch den erzeugten Strom einspeist. Windenergieanlagen weisen in der Regel wenigstens zwei Rotorblätter auf. Windenergieanlagen mit nur einem Rotorblatt sind aus dem Stand der Technik ebenfalls bekannt, haben aber keine praktische Bedeutung, da die durch die zwangsläufige Asymmetrie des Rotors bedingten Nachteile eine Durchsetzung dieses Rotorkonzeptes bisher verhinderten. Am weitaus häufigsten finden Rotoren mit drei Rotorblättern Verwendung.

Die EP 2101058 A2 offenbart ein Verfahren zum Drehen einer Komponente einer Windenergieanlage durch Verfahren einer Verstelleinrichtung, wobei die Verstelleinrichtung mindestens zwei jeweils mindestens einen Elektromotor aufweisende Verstellantriebe zum Verfahren der Verstelleinrichtung umfasst, wobei während des Verfahrens der Verstelleinrichtung der Elektromotor mindestens einer der mindestens zwei Verstellantriebe mit einer anderen Drehzahl betrieben wird, als der Elektromotor mindestens eines anderen der mindestens zwei Verstellantriebe. In Absatz [0014] wird beschreiben, dass die Elektromotoren Asynchronmotoren sein können.

Die DE 10 2009 046 883 A1 offenbart eine Pitchantriebsvorrichtung für eine Wind - oder Wasserkraftanlage umfassend einen Synchronmotor und eine Motorbetrieb - Umschalteinheit für die Umschaltung zwischen einem Normalbetrieb und einem Notbetrieb. Hierbei ist der Synchronmotor im Normalbetrieb mittels einer Wechsel - oder Drehstromversorgung und im Notbetrieb mittels einer Gleichstromversorgung betreibbar.

Die Erfindung betrifft ferner ein Verfahren zum Betrieb eines Pitchsystems, mit einem Pitchsystem nach einem der Ansprüche 1 bis 11.

Damit ist es die Aufgabe der Erfindung, ein Pitchsystem und eine Wind- oder Wasserenergieanlage mit einem Pitchsystem anzugeben, die besonders sicher zu betreiben und kostengünstig sind, sowie ein Verfahren zum Betrieb eines Pitchsystems anzugeben, das besonders sicher ist.

Die zuvor hergeleitete und aufgezeigte Aufgabe ist ausgehend von dem eingangs beschriebenen Pitchsystem dadurch gelöst, dass wenigstens einer der Pitchmotoren ein Gleichstrommotor und wenigstens einer der Pitchmotoren ein Wechselstrommotor ist, wobei jeder Wechselstrommotor durch wenigstens einen Umrichter speisbar ist oder jeder Pitchmotor durch wenigstens einen Umrichter speisbar ist. Demnach umfasst die Erfindung sowohl Ausgestaltungen bei denen ausschließlich die Wechselstrommotoren durch Umrichter gespeist werden als auch Ausgestaltungen bei denen alle Pitchmotoren, d. h. insbesondere alle Wechselstrommotoren und alle Gleichstrommotoren durch Umrichter gespeist werden. Prinzipiell können mehrere Pitchmotoren durch einen Umrichter gespeist werden, aber auch mehrere Umrichter einen Pitchmotor speisen.

Durch die Verwendung von sowohl Wechselstrommotoren als auch Gleichstrommotoren ergeben sich bisher nicht genutzte Vorteile für Pitchsysteme. Insbesondere lässt sich hierdurch sowohl eine bessere Regelbarkeit als bei der Verwendung von ausschließlich Wechselstrommotoren als auch geringere Kosten als bei der Verwendung von ausschließlich Gleichstrommotoren erzielen. Des Weiteren ist in vielen Fällen der vorhandene Bauraum für das Pitchsystem in einem Rotor begrenzt. Unter anderem kann auch der vorhandene Platz für die Pitchmotoren je Rotorblatt unterschiedlich ausfallen. Durch die Verwendung von sowohl Wechselstrommotoren als auch Gleichstrommotoren kann dieser Platz optimal ausgenutzt werden. Beispielsweise kann für diejenigen Pitchmotoren für die wenig Bauraum zur Verfügung steht auf die kleineren Wechselstrommotoren zurückgegriffen werden und für diejenigen Pitchmotoren für die ausreichend Bauraum zur Verfügung steht auf die größeren Gleichstrommotoren zurückgegriffen werden. Ferner ist es möglich, dass einige Pitchmotoren aufgrund ihrer Einbauposition schlechter für Wartungspersonal zugänglich sind als andere Pitchmotoren. In diesem Fall ist es vorteilhaft die weniger gut zugänglichen Pitchmotoren als Wechselstrommotoren und die besser zugänglichen Pitchmotoren als Gleichstrommotoren auszubilden. Hierdurch wird der Wartungsaufwand minimiert, da auf diese Weise die Gleichstrommotoren, die in der Regel häufiger gewartet werden müssen, einfacher für das Wartungspersonal zu erreichen sind. Gemäß einer vorteilhaften Weiterbildung der Erfindung ist vorgesehen, dass wenigstens einem Rotorblatt kein Gleichstrommotor zugeordnet ist, wobei die Anzahl der Rotorblätter, denen kein Gleichstrommotor zugeordnet ist, derart gewählt ist, dass bei Ausfall der Pitchverstellung der Rotorblätter, denen kein Gleichstrommotor zugeordnet ist, der Rotor durch aerodynamische Bremsung mit den Rotorblättern, denen wenigstens ein Gleichstrommotor zugeordnet ist, abbremsbar ist.

Je nach Bauart einer Windenergieanlage ist die Wirkung der aerodynamischen Bremsung durch in die Fahnenstellung gebrachte Rotorblätter unterschiedlich. Insbesondere die Form der Rotorblätter beeinflusst die Stärke der aerodynamischen Bremsung. Überraschenderweise hat sich herausgestellt, dass es bei vielen Windenergieanlagen ausreicht nur mit einem Teil der Rotorblätter aerodynamisch zu bremsen, um den Rotor der Windenergieanlage abzubremsen und zum Stillstand zu bringen. Dies ist nur möglich, wenn die antreibende Wirkung der Rotorblätter, die sich im Wind befinden und somit Energie aus dem Wind aufnehmen, kleiner ist als die durch die aerodynamisch bremsenden Rotorblätter und sonstige Verluste hervorgerufene abbremsende Wirkung. Mit anderen Worten, der Rotor wird abgebremst, wenn mehr Rotationsenergie des Rotors durch die Luftreibung der aerodynamisch bremsenden Rotorblätter und sonstige Verluste dissipiert wird als Bewegungsenergie des Windes durch die im Wind befindlichen Rotorblätter in Rotationsenergie des Rotors umgewandelt wird.

Gemäß der Erfindung wird diese Erkenntnis genutzt, um die Anzahl der im Pitchsystem verwendeten Gleichstrommotoren zu reduzieren. Hierzu wird bei wenigstens einem Rotorblatt auf einen Gleichstrommotor verzichtet. Um das entsprechende Rotorblatt trotzdem verstellen zu können, kann anstelle des Gleichstrommotors wenigstens ein Wechselstrommotor vorgesehen sein. Je nach Anzahl der Rotorblätter und den Eigenschaften der Windenergieanlage kann es auch vorteilhaft sein bei mehreren Rotorblättern auf Gleichstrommotoren zu verzichten. Hierbei muss die Anzahl jedoch stets derart gewählt sein, dass gewährleistet ist, dass der Rotor durch aerodynamische Bremsung mit den Rotorblättern, denen wenigstens ein Gleichstrommotor zugeordnet ist, abbremsbar ist. Dies ermöglicht auch bei Ausfall der Pitchverstellung der Rotorblätter, denen kein Gleichstrommotor zugeordnet ist, einen sicheren Betrieb der Windenergieanlage und insbesondere ein sicheres Anhalten des Rotors. Durch den teilweisen Verzicht auf Gleichstrommotoren können insbesondere die Kosten für das Pitchsystem reduziert werden.

Eine vorteilhafte Ausgestaltung der Erfindung zeichnet sich dadurch aus, dass die Gesamtzahl der Rotorblätter drei beträgt, wobei zwei Rotorblättern je ein Gleichstrommotor zugeordnet ist und dem verbleibenden Rotorblatt ein Wechselstrommotor zugeordnet ist. Diese Ausgestaltung zeichnet sich durch die derzeit in der Praxis übliche Verwendung von drei Rotorblättern aus. Hierbei werden zwei der drei Rotorblätter von jeweils einem Gleichstrommotor angetrieben und das verbleibende dritte Rotorblatt von einem Wechselstrommotor. Selbst bei einem Ausfall der Rotorblattverstellung des Rotorblatts, das durch den Wechselstrommotor angetrieben wird, kann der Rotor durch aerodynamische Bremsung mit den Rotorblättern, die von den Gleichstrommotoren angetrieben werden, weiterhin zuverlässig abgebremst werden.

Gemäß einer besonders vorteilhaften Weiterbildung der Erfindung ist vorgesehen, dass wenigstens einem Rotorblatt wenigstens zwei Pitchmotoren zugeordnet sind, wobei wenigstens einer der wenigstens zwei Pitchmotoren ein Gleichstrommotor und wenigstens ein anderer der wenigstens zwei Pitchmotoren ein Wechselstrommotor ist. Durch die Kombination von wenigstens einem Wechselstrommotor und wenigstens einem Gleichstrommotor je Rotorblatt können eine Vielzahl von Vorteilen erreicht werden. Einerseits können die verschiedenartigen Pitchmotoren je nach Betriebssituation abwechselnd eingesetzt werden. Zum Beispiel werden der oder die Wechselstrommotoren während des normalen Betriebs eingesetzt wohingegen der oder die Gleichstrommotoren nur während eines Notbetriebs eingesetzt werden. Ein Notbetrieb kann hierbei insbesondere dadurch gekennzeichnet sein, dass eine Störung aufgetreten ist und die Windenergieanlage aufgrund dieser Störung angehalten werden soll. Hierzu werden vorzugsweise alle Rotorblätter aus dem Wind gedreht und der Rotor aerodynamisch gebremst. Der Vorteil dieser Variante liegt darin, dass der Wechselstrommotor den normalen Betrieb gewährleistet und der verschleißanfällige Gleichstrommotor lediglich in den seltenen Fällen des Notbetriebs eingesetzt wird. Hierdurch wird die Häufigkeit der notwendigen Wartungsarbeiten an den Gleichstrommotoren verringert. Selbst bei einem Ausfall aller einem Rotorblatt zugeordneten Wechselstrommotoren oder der diese Wechselstrommotoren speisenden Komponenten, kann das Rotorblatt weiterhin durch den wenigstens einen Gleichstrommotor angetrieben und zuverlässig aus dem Wind gedreht werden.

Andererseits können die verschiedenartigen Pitchmotoren auch gleichzeitig eingesetzt werden. Hierbei ist es besonders vorteilhaft, wenn die Pitchmotoren eines Rotorblattes derart angesteuert werden, dass die durch die Pitchmotoren angetriebenen Zahnräder gegeneinander verspannt werden. Hierdurch lässt sich verhindern, dass bei einem Wechsel der Drehrichtung des Rotorblattes die Zähne der Zahnräder einen Flankenwechsel vollziehen, d. h. die Zähne der Zahnräder liegen stets mit derselben Flanke an den Zähnen des Zahnkranzes an, in den sie eingreifen. Der Zahnkranz ist hierbei in der Regel entweder an der inneren oder äußeren Wandung der Rotorblattwurzel oder, falls die Pitchmotoren nicht in der Nabe des Rotors, sondern in den Rotorblättern selbst angeordnet sind, an der Nabe selbst angeordnet.

Des Weiteren kann durch die Verwendung von sowohl wenigstens eines Gleichstrommotors als auch wenigstens eines Wechselstrommotors für ein Rotorblatt der unter Umständen für die Montage der Pitchmotoren begrenzt zur Verfügung stehende Bauraum optimal ausgenutzt werden. Beispielsweise kann der Fall eintreten, dass der Bauraum für die Montage der Pitchmotoren für ein Rotorblatt nicht ausreichend ist, um zwei Gleichstrommotoren der erforderlichen Leistungsklasse einzubauen. In einem derartigen Fall besteht die Möglichkeit auf die Verwendung eines Gleichstrommotors und eines Wechselstrommotors auszuweichen, für die der zur Verfügung stehende Bauraum aufgrund der geringeren Größe des Wechselstrommotors bei gleicher Leistung ausreichend ist.

Bei einer bevorzugten Ausgestaltung der Erfindung ist vorgesehen, dass jedem Rotorblatt wenigstens zwei Pitchmotoren zugeordnet sind, wobei wenigstens einer der wenigstens zwei Pitchmotoren ein Gleichstrommotor und wenigstens ein anderer der wenigstens zwei Pitchmotoren ein Wechselstrommotor ist. Bei dieser Ausgestaltung ist nun sichergestellt, dass selbst bei einem Ausfall aller Wechselstrommotoren oder der die Wechselstrommotoren speisenden Komponenten die Rotorblätter durch die Gleichstrommotoren aus dem Wind gedreht und so der Rotor durch aerodynamische Bremsung abgebremst werden kann. Gleiches gilt bei einem Ausfall aller Gleichstrommotoren oder der die Gleichstrommotoren speisenden Komponenten, bei dem die Rotorblätter durch die Wechselstrommotoren aus dem Wind gedreht und so der Rotor durch aerodynamische Bremsung abgebremst werden kann. Hierdurch wird nicht nur eine Redundanz geschaffen, die auch durch die einfache Erhöhung der Motorenzahl eines Motorentyps erreicht werden könnte. Dadurch, dass sich die Gleichstrommotoren und Wechselstrommotoren, sowie die diese Motoren speisenden Komponenten, in ihrer Funktionsweise wesentlich unterscheiden, ergibt sich dass diese verschiedenen Motorentypen und die diese Motorentypen speisenden Komponenten unter unterschiedlichen Bedingungen ausfallen. Beispielsweise sind Bedingungen denkbar, unter denen lediglich einer dieser beiden Motorentypen ausfällt, wohingegen der andere Motorentyp weiterhin einsatzfähig ist. Daher ist ein Pitchsystem, das sowohl Wechselstrommotoren als auch Gleichstrommotoren verwendet, im Bezug auf die Zuverlässigkeit einem Pitchsystem überlegen, welches lediglich einen Motorentyp verwendet. Ebendiese Zuverlässigkeit ist für ein Pitchsystem von besonderer Relevanz, da in einem Notfall der Rotor sicher zum Stillstand gebracht werden muss, um eine drohende Havarie zu vermeiden.

Gemäß einer weiteren bevorzugten Ausgestaltung der Erfindung ist vorgesehen, dass jedem Rotorblatt zwei Pitchmotoren zugeordnet sind, wobei je Rotorblatt einer dieser Pitchmotoren ein Gleichstrommotor ist und der andere dieser zwei Pitchmotoren ein Wechselstrommotor ist. Bei dieser bevorzugten Ausgestaltung der Erfindung sind je Rotorblatt zwei Pitchmotoren vorgesehen, wobei jeweils einer dieser Pitchmotoren ein Gleichstrommotor und der jeweils andere Pitchmotor ein Wechselstrommotor ist. Dadurch dass jedem Rotorblatt die gleiche Anzahl und Art von Pitchmotoren zugeordnet ist, ergibt sich auf einfache Weise eine symmetrische Gewichtsverteilung des Pitchsystems innerhalb des Rotors.

Darüber hinaus ist es vorteilhaft, wenn jedem Rotorblatt drei Pitchmotoren zugeordnet sind, wobei je Rotorblatt einer dieser Pitchmotoren ein Gleichstrommotor ist und die beiden anderen dieser drei Pitchmotoren Wechselstrommotoren sind. Diese Ausgestaltung der Erfindung ermöglicht es im normalen Betrieb die Wechselstrommotoren zu verwenden und diese wie bereits beschrieben derart anzusteuern, dass die durch die Wechselstrommotoren angetriebenen Zahnräder gegeneinander verspannt werden. Für den Notbetrieb stehen dann alternativ oder unterstützend zu den Wechselstrommotoren die Gleichstrommotoren zur Verfügung. Insbesondere ist es vorteilhaft, wenn die Gleichstrommotoren derart ausgelegt sind, dass bei einem Ausfall einer beliebigen Zahl der Wechselstrommotoren oder der die Wechselstrommotoren speisenden Komponenten die Rotorblätter durch die Gleichstrommotoren aus dem Wind gedreht und so der Rotor durch aerodynamische Bremsung abgebremst werden kann.

Gemäß einer weiteren bevorzugten Weiterbildung der Erfindung ist vorgesehen, dass das Pitchsystem wenigstens einen Notenergiespeicher aufweist, wobei mit dem wenigstens einen Notenergiespeicher wenigstens ein Pitchmotor im Notfall antreibbar ist. Notenergiespeicher sind notwendig, um auch bei einem Ausfall des das Pitchsystem mit Energie versorgenden Netzes weiterhin eine Verstellung des Pitchwinkels vornehmen zu können. Üblicherweise wird bei Detektion eines längeren Netzausfalls durch Verfahren der Rotorblätter in die Fahnenstellung der Rotor der Windenergieanlage abgebremst und die Windenergieanlage vorübergehend abgeschaltet. Als Notenergiespeicher können Akkumulatoren oder Kondensatoren vorgesehen sein, insbesondere so genannte Ultracaps. Jeder Notenergiespeicher kann hierbei je nach Bedarf aus einer Mehrzahl an parallel und/oder in Reihe geschalteten Akkumulatoren oder Kondensatoren zusammengesetzt sein. Wechselstrommotoren werden hierbei indirekt über den entsprechenden Umrichter mit Energie aus dem Notenergiespeicher versorgt. Gleichstrommotoren können ebenfalls indirekt über den entsprechenden Umrichter mit Energie aus dem Notenergiespeicher versorgt werden. Gleichstrommotoren bieten jedoch gegenüber Wechselstrommotoren den einzigartigen Vorteil, dass sie im Notfall direkt mit dem Notenergiespeicher verbunden werden können. Dass heißt die Gleichstrommotoren können ohne die Zwischenschaltung eines Umrichters betrieben werden, der eine relativ hohe Ausfallwahrscheinlichkeit aufweist. Dies bietet den besonderen Vorteil, dass Gleichstrommotoren auch bei Ausfall des sie sonst mit Energie versorgenden Umrichters durch eine direkte Aufschaltung auf den Notenergiespeicher betrieben werden können.

Bei einer vorteilhaften Ausgestaltung der Erfindung ist vorgesehen, dass das Pitchsystem je Gleichstrommotor einen zugeordneten Notenergiespeicher aufweist, wobei mit jedem der zugeordneten Notenergiespeicher im Notfall der jeweilig zugeordnete Gleichstrommotor antreibbar ist. Dadurch dass jedem Gleichstrommotor ein Notenergiespeicher funktional zugeordnet ist, ist gewährleistet, dass alle Gleichstrommotoren im Notfall, d. h. insbesondere bei einem Netzausfall, mit der nötigen Energie versorgt werden, um die Rotorblätter aus dem Wind zu drehen.

Gemäß einer weiteren vorteilhaften Ausgestaltung der Erfindung ist vorgesehen, dass das Pitchsystem je Pitchmotor einen zugeordneten Notenergiespeicher aufweist, wobei mit jedem der zugeordneten Notenergiespeicher im Notfall der jeweilig zugeordnete Pitchmotor antreibbar ist. Unter bestimmten Bedingungen kann es vorteilhaft sein, wenn jedem Pitchmotor ein Notenergiespeicher funktional zugeordnet ist. Hierdurch wird sichergestellt, dass nicht nur die Gleichstrommotoren sondern auch die Wechselstrommotoren im Notfall zuverlässig mit Energie versorgt werden.

Bei einer besonders vorteilhaften Ausgestaltung der Erfindung ist vorgesehen, dass das Pitchsystem je Rotorblatt einen zugeordneten Notenergiespeicher aufweist, wobei mit jedem der zugeordneten Notenergiespeicher im Notfall alle Gleichstrommotoren oder alle Pitchmotoren des jeweilig zugeordneten Rotorblattes antreibbar sind.

Die zuvor hergeleitete und aufgezeigte Aufgabe ist ausgehend von dem eingangs beschriebenen Verfahren zum Betrieb eines Pitchsystems dadurch gelöst, dass bei Ausfall wenigstens eines Wechselstrommotors und/oder des den Wechselstrommotor speisenden Umrichters bzw. der den Wechselstrommotor speisenden Umrichter, die Rotorblätter durch die verbleibenden nicht ausgefallenen Pitchmotoren, in eine derartige Position gedreht werden, dass der Rotor aerodynamisch gebremst wird. Aufgrund der relativ hohen Ausfallwahrscheinlichkeit der Leistungselektronik der üblicherweise in Pitchsystemen verwendeten Umrichter ist es von entscheidender Bedeutung für den Fall, dass ein oder mehrere derartige Umrichter ausfallen, die Windenergieanlage sicher zum Stillstand zu bringen. Daher werden bei Ausfall wenigstens eines Wechselstrommotors und/oder des den Wechselstrommotor speisenden Umrichters bzw. der den Wechselstrommotor speisenden Umrichter die Rotorblätter durch die verbleibenden nicht ausgefallenen Pitchmotoren aus dem Wind gedreht und so die Windenergieanlage zum Stillstand gebracht. Besonders vorteilhaft ist es hierzu ausschließlich die Gleichstrommotoren zu verwenden. Die Gleichstrommotoren können insbesondere direkt von einem oder mehreren Notenergiespeichern gespeist werden.

Alle zuvor im Bezug auf Windenergieanlagen beschriebenen Weiterbildungen der Erfindung und deren Vorteile gelten in analoger Weise ebenfalls für Wasserenergieanlagen, mit dem rein begrifflichen Unterschied, dass die Rotorblätter von Wasserenergieanlagen keiner aerodynamischen sondern einer fluiddynamischen Reibung unterliegen.

Im Einzelnen gibt es nun eine Vielzahl von Möglichkeiten, das erfindungsgemäße Pitchsystem auszugestalten und weiterzubilden. Dazu wird auf die dem Patentanspruch 1 nachgeordneten Patentansprüche sowie auf die nachfolgende detaillierte Beschreibung bevorzugter Ausführungsbeispiele der Erfindung unter Bezugnahme auf die Zeichnung verwiesen.

In der Zeichnung zeigt
- Fig. 1: schematisch einen Rotor mit einem erfindungsgemäßen Pitchsystem nach einer ersten Ausgestaltung der Erfindung,
- Fig. 2: schematisch einen Rotor mit einem erfindungsgemäßen Pitchsystem nach einer zweiten Ausgestaltung der Erfindung und
- Fig. 3: schematisch einen Rotor mit einem erfindungsgemäßen Pitchsystem nach einer dritten Ausgestaltung der Erfindung.

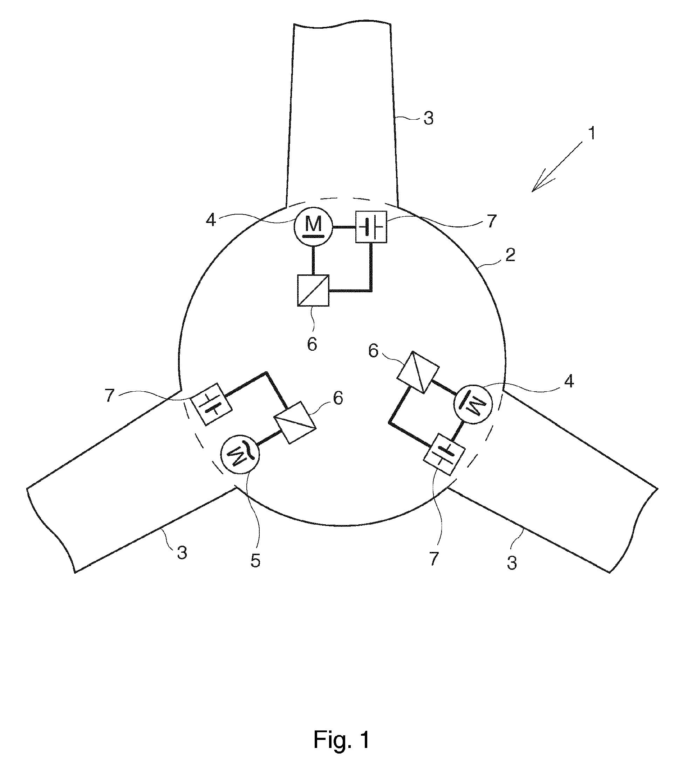

Die Fig. 1 zeigt schematisch einen Rotor 1 mit einem erfindungsgemäßen Pitchsystem. Der Rotor 1 weist eine Rotornabe 2 und drei Rotorblätter 3 auf. Die Rotorblätter 3 sind rotationssymmetrisch um die Rotornabe 2 angeordnet. Jedes der Rotorblätter 3 ist um seine Längsachse drehbar. Die Rotorblätter sind in der Fig. 1 und in den weiteren Figuren nicht in ihrer vollen Länge dargestellt. Zur besseren Übersichtlichkeit ist lediglich der der Rotornabe 2 am nächsten liegende Teil der Rotorblätter 3 dargestellt, der auch als Rotorblattwurzel bezeichnet wird. Zwei der drei Rotorblätter 3 ist jeweils ein Gleichstrommotor 4 als Pitchmotor zugeordnet. Dem verbleibenden dritten Rotorblatt 3 ist ein Wechselstrommotor 5 als Pitchmotor zugeordnet. Jedem Pitchmotor ist wiederum ein Umrichter 6 zugeordnet, der den entsprechenden Pitchmotor speist. Des Weiteren ist jedem Umrichter 6 ein Notenergiespeicher 7 zugeordnet, durch den der entsprechende Umrichter 6 zum Beispiel bei einem Netzausfall mit Energie versorgt werden kann. Im normalen Betrieb werden die Umrichter 6 durch das in der Fig. 1 nicht dargestellte externe Netz mit Energie versorgt, in das die Windenergieanlage auch die aus dem Wind gewonnene Energie speist. Die Notenergiespeicher 7, die den Rotorblättern 3 mit einem Gleichstrommotor 4 zugeordnet sind, können über eine direkte schaltbare Verbindung mit dem entsprechenden Gleichstrommotor 4 verbunden werden. Hierdurch kann auch bei Ausfall des entsprechenden Umrichters 6 der jeweilige Gleichstrommotor 4 mit Energie versorgt werden.

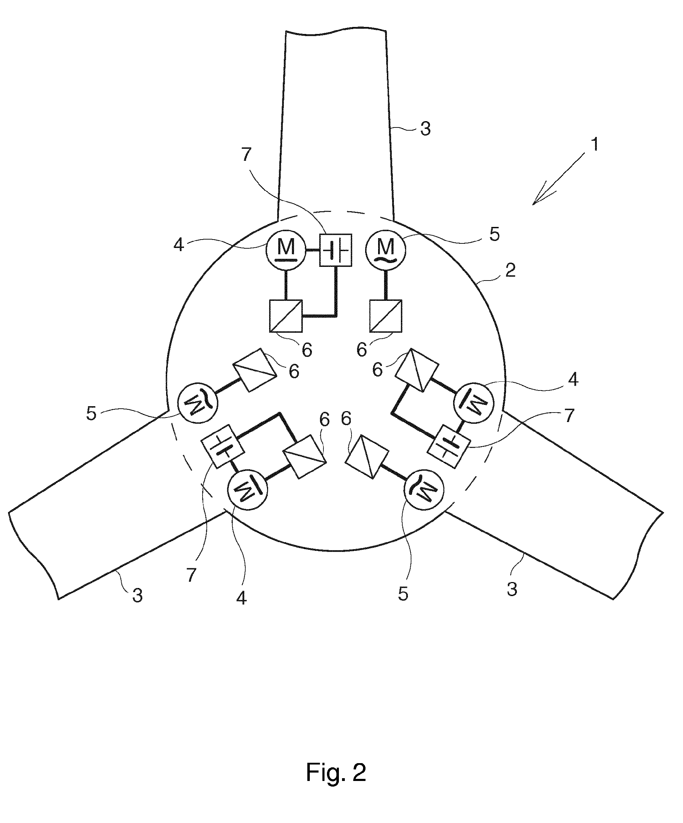

In Fig. 2 ist schematisch ein Rotor 1 mit einem erfindungsgemäßen Pitchsystem nach einer weiteren Ausgestaltung der Erfindung gezeigt. Der Aufbau des Rotors 1 aus einer Rotornabe 2 und drei Rotorblättern 3 entspricht dem in der Fig. 1 gezeigten Aufbau und es wird hiermit auf die zugehörige Beschreibung verwiesen. Im Gegensatz zu dem in der Fig. 1 gezeigten Pitchsystem weist das Pitchsystem der Fig. 2 je Rotorblatt 3 zwei Pitchmotoren auf. Hierbei ist jedem Rotorblatt 3 je ein Gleichstrommotor 4 und je ein Wechselstrommotor 5 zugeordnet. Jedem Pitchmotor ist genau ein Umrichter 6 zugeordnet, der den jeweiligen Pitchmotor speist. Des Weiteren ist jedem Gleichstrommotor 4 jeweils ein Notenergiespeicher 7 zugeordnet. Dieser Notenergiespeicher 7 kann sowohl direkt den entsprechenden Gleichstrommotor 4 als auch indirekt über den jeweiligen Umrichter 6 den Gleichstrommotor 4 speisen. Hierdurch kann auch bei Ausfall des entsprechenden Umrichters 6 der jeweilige Gleichstrommotor 4 mit Energie versorgt werden.

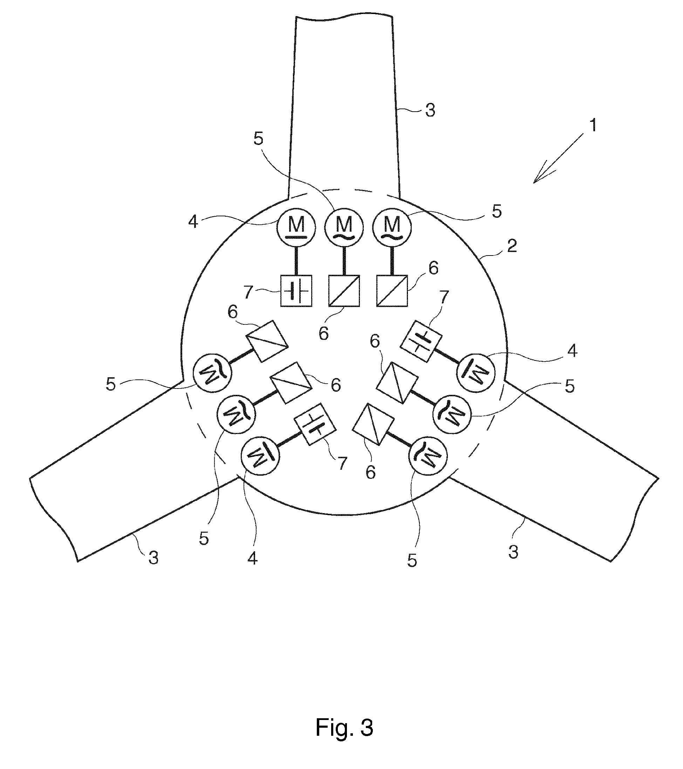

Die Fig. 3 zeigt schematisch ein erfindungsgemäßes Pitchsystem nach einer besonders vorteilhaften Ausgestaltung der Erfindung. Der Aufbau des Rotors 1 aus einer Rotornabe 2 und drei Rotorblättern 3 entspricht dem in der Fig. 1 und der Fig. 2 gezeigten Aufbau und es wird hiermit auf die zugehörige Beschreibung der Fig. 1 verwiesen. Im Gegensatz zu den in den Figuren 1 und 2 gezeigten Pitchsystemen weist das Pitchsystem der Fig. 3 je Rotorblatt 3 drei Pitchmotoren auf. Hierbei sind jedem Rotorblatt 3 je ein Gleichstrommotor 4 und je zwei Wechselstrommotoren 5 zugeordnet. Jeder der Wechselstrommotoren 5 wird durch je einen zugeordneten Umrichter 6 gespeist. Ferner ist jedem Gleichstrommotor 4 jeweils ein Notenergiespeicher 7 zugeordnet. Mittels der Notenergiespeicher 7 sind die Gleichstrommotoren 5 direkt mit Energie versorgbar. Eine weitere hier nicht dargestellt Ausgestaltung der Erfindung beinhaltet, dass jedem Gleichstrommotor 4 zusätzlich noch ein Umrichter 6 zugeordnet ist. Über diesen Umrichter 6 kann der jeweilige Gleichstrommotor 4 mit Energie aus dem ebenfalls nicht dargestellten Netz oder mit Energie aus dem zugeordneten Notenergiespeicher 7 versorgt werden.

### Bezugszeichenliste

- 1: Rotor
- 2: Rotornabe
- 3: Rotorblätter
- 4: Gleichstrommotor
- 5: Wechselstrommotor
- 6: Umrichter
- 7: Notenergiespeicher

## Patentansprüche

1. Pitchsystem für einen Rotor (1), wobei der Rotor (1) eine Rotornabe (2) und wenigstens zwei Rotorblätter (3) aufweist, jedes der Rotorblätter (3) um seine Längsachse drehbar an der Rotornabe (2) angeordnet ist, das Pitchsystem je Rotorblatt (3) wenigstens einen zugeordneten Pitchmotor aufweist, und jedes der Rotorblätter (3) durch den wenigstens einen zugeordneten Pitchmotor um seine Längsachse drehbar ist,
**dadurch gekennzeichnet,**
**dass** wenigstens einer der Pitchmotoren ein Gleichstrommotor (4) und wenigstens einer der Pitchmotoren ein Wechselstrommotor (5) ist, wobei jeder Wechselstrommotor (5) durch wenigstens einen Umrichter (6) speisbar ist oder jeder Pitchmotor durch wenigstens einen Umrichter (6) speisbar ist.

2. Pitchsystem nach Anspruch 1, **dadurch gekennzeichnet, dass** wenigstens einem Rotorblatt (3) kein Gleichstrommotor (4) zugeordnet ist, wobei die Anzahl der Rotorblätter (3), denen kein Gleichstrommotor (4) zugeordnet ist, derart gewählt ist, dass bei Ausfall der Pitchverstellung der Rotorblätter (3), denen kein Gleichstrommotor (4) zugeordnet ist, der Rotor (1) durch aerodynamische Bremsung mit den Rotorblättern (3), denen wenigstens ein Gleichstrommotor (4) zugeordnet ist, abbremsbar ist.

3. Pitchsystem nach Anspruch 1 oder 2, **dadurch gekennzeichnet, dass** die Gesamtzahl der Rotorblätter (3) drei beträgt, wobei zwei Rotorblättern (3) je ein Gleichstrommotor (4) zugeordnet ist und dem verbleibenden Rotorblatt (3) ein Wechselstrommotor (5) zugeordnet ist.

4. Pitchsystem nach Anspruch 1 oder 2, **dadurch gekennzeichnet, dass** wenigstens einem Rotorblatt (3) wenigstens zwei Pitchmotoren zugeordnet sind, wobei wenigstens einer der wenigstens zwei Pitchmotoren ein Gleichstrommotor (4) und wenigstens ein anderer der wenigstens zwei Pitchmotoren ein Wechselstrommotor (5) ist.

5. Pitchsystem nach Anspruch 1, **dadurch gekennzeichnet, dass** jedem Rotorblatt (3) wenigstens zwei Pitchmotoren zugeordnet sind, wobei wenigstens einer der wenigstens zwei Pitchmotoren ein Gleichstrommotor (4) und wenigstens ein anderer der wenigstens zwei Pitchmotoren ein Wechselstrommotor (5) ist.

6. Pitchsystem nach Anspruch 5, **dadurch gekennzeichnet, dass** jedem Rotorblatt (3) zwei Pitchmotoren zugeordnet sind, wobei je Rotorblatt (3) einer dieser Pitchmotoren ein Gleichstrommotor (4) ist und der andere dieser zwei Pitchmotoren ein Wechselstrommotor (5) ist.

7. Pitchsystem nach Anspruch 5, **dadurch gekennzeichnet, dass** jedem Rotorblatt (3) drei Pitchmotoren zugeordnet sind, wobei je Rotorblatt (3) einer dieser Pitchmotoren ein Gleichstrommotor (4) ist und die beiden anderen dieser drei Pitchmotoren Wechselstrommotoren (5) sind.

8. Pitchsystem nach einem der Ansprüche 1 bis 7, **dadurch gekennzeichnet, dass** das Pitchsystem wenigstens einen Notenergiespeicher (7) aufweist, wobei mit dem wenigstens einen Notenergiespeicher (7) wenigstens ein Pitchmotor im Notfall antreibbar ist.

9. Pitchsystem nach Anspruch 8, **dadurch gekennzeichnet, dass** das Pitchsystem je Gleichstrommotor (4) einen zugeordneten Notenergiespeicher (7) aufweist, wobei mit jedem der zugeordneten Notenergiespeicher (7) im Notfall der jeweilig zugeordnete Gleichstrommotor (4) antreibbar ist.

10. Pitchsystem nach Anspruch 9, **dadurch gekennzeichnet, dass** das Pitchsystem je Pitchmotor einen zugeordneten Notenergiespeicher (7) aufweist, wobei mit jedem der zugeordneten Notenergiespeicher (7) im Notfall der jeweilig zugeordnete Pitchmotor antreibbar ist.

11. Pitchsystem nach Anspruch 8, **dadurch gekennzeichnet, dass** das Pitchsystem je Rotorblatt (3) einen zugeordneten Notenergiespeicher (7) aufweist, wobei mit jedem der zugeordneten Notenergiespeicher (7) im Notfall alle Gleichstrommotoren (4) oder alle Pitchmotoren des jeweilig zugeordneten Rotorblattes (3) antreibbar sind.

12. Wind- oder Wasserenergieanlage mit einem Pitchsystem,
**dadurch gekennzeichnet,**
**dass** das Pitchsystem nach einem der Ansprüche 1 bis 11 ausgestaltet ist.

13. Verfahren zum Betrieb eines Pitchsystems, mit einem Pitchsystem nach einem der Ansprüche 1 bis 11,
**dadurch gekennzeichnet,**
**dass** bei Ausfall wenigstens eines Wechselstrommotors (5) und/oder des den Wechselstrommotor (5) speisenden Umrichters (6) bzw. der den Wechselstrommotor (5) speisenden Umrichter (6), die Rotorblätter (3) durch die verbleibenden nicht ausgefallenen Pitchmotoren, in eine derartige Position gedreht werden, dass der Rotor (1) aerodynamisch gebremst wird.
